# FASCICULE DE BREVET EUROPEEN

(11) **EP 0 481 835 B1**
(45) Date de publication et mention de la délivrance du brevet: **08.01.1997**
(21) Numéro de dépôt: 91402525.9
(22) Date de dépôt: 24.09.1991
(51) Int. Cl.: F23D 14/22, F23D 14/32, F23D 14/58, C21C 5/46

(54) **Procédé de chauffe d'une enceinte thermique et brûleur**
Verfahren zur Erwärmung eines thermischen Hohlraums und Brenner
Method for heating a thermal enclosure and burner

(30) Priorité: 16.10.1990 FR 9012737
(43) Date de publication de la demande: 22.04.1992
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Laurenceau, Serge, 23, rue du Champ Lagarde, F-78000 Versailles (FR); Charon, Olivier, F-91940 Les Ulis (FR)
(74) Mandataire: Le Moenner, Gabriel

(56) Documents cités:
- EP-A- 0 141 101
- EP-A- 0 210 314
- BE-A- 764 890
- FR-A- 2 098 101
- FR-A- 2 098 641
- FR-A- 2 374 590
- GB-A- 1 044 153
- GB-A- 1 070 049
- US-A- 3 169 161

## Description

La présente invention concerne les procédés de chauffe d'une enceinte thermique au moyen d'au moins un brûleur générant au moins deux flammes s'étendant dans des directions différentes à partir du brûleur.

Un procédé de ce type est connu du document FR-A-2.058.641 qui décrit un aérobrûleur conçu pour former au moins deux flammes courtes identiques.

Pour les combustions générées en partant d'un combustible et d'un comburant constitué d'air, il est relativement aisé de développer de nombreuses formes de flammes adaptées aux géométries des enceintes thermiques dans lesquelles différents procédés de chauffe sont établis. Les débits massiques mis en oeuvre lors de comubustions avec l'air (environ 1400 kg/MW) et les quantités de mouvement qui peuvent en résulter permettent de façonner relativement aisément les flammes pour leur donner des formes appropriées, par exemple filiformes ou en forme de boules. Lorsqu'on souhaite avoir de hautes performances thermiques de flammes, l'utilisation d'air fortement préchauffé (entre 1200 et 1400°C) s'impose et les facilités de mise en oeuvre susmentionnées s'amenuisent considérablement pour des raisons technologiques.

Un nombre très important d'applications de combustion nécessitant des performances thermiques élevées font recours à l'oxygène comme comburant dans des brûleurs industriels spécifiques. Les débits massiques étant différents (environ 300 kg/MW avec de l'oxygène), les brûleurs utilisant l'oxygène pur comme comburant ne permettent pas actuellement de juguler les problèmes de mise en forme des flammes et encore moins le zonage des produits de combustion permettant de réduire les risques d'oxydation des matériaux à traiter.

Par ailleurs, en ce qui concerne l'émission de polluants, tels que les oxydes d'azote (NOx), les techniques usuelles de recirculation et d'étagement du combustible et/ou du comburant ne sont pas sans inconvénient sur les processus thermiques. En effet, la recirculation consiste à générer des zones proches du nez du brûleur où les gaz déjà brûlés reviennent dans la flamme. Il s'ensuit un abaissement des concentrations locales en oxygène et une diminution sensible de la température de flamme qui permettent de minimiser les oxydes d'azote, l'abaissement de la température de flamme étant par contre préjudiciable à l'efficacité thermique du procédé de chauffe. De même, l'étagement de la combustion permet d'effectuer une combustion en régime sous-stoechiométrique dans une première zone proche du nez du brûleur, le complément de combustible ou de comburant étant apporté par une troisième injection qui se mélange plus loin aux gaz issus de la première zone de combustion. Cette technique est également favorable à la minimisation de la production d'oxydes de carbone mais altère considérablement l'efficacité thermique du procédé de chauffe.

La présente invention a pour objet de proposer un procédé de chauffe à performances thermiques élevées par combustion de mélanges oxycombustibles particulièrement simple à mettre en oeuvre, offrant une grande souplesse d'utilisation et permettant d'optimiser les rendements thermiques du procédé de chauffe.

Pour ce faire, selon une caractéristique de l'invention, on génère dans le brûleur, à partir de mélanges d'oxygène et de combustible, au moins deux flammes différenciées présentant des puissances et/ou pouvoirs oxydants/réducteurs différents.

Selon une caractéristique plus particulière de l'invention, on alimente au moins une des flammes avec des débits d'oxygène et de combustible plus élevés que les débits d'alimentation de l'autre flamme, typiquement une des flammes étant alimentée en mélange oxycombustible sur-stoechiométrique et l'autre flamme en mélange sous-stoechiométrique.

De cette façon, selon l'invention, il est possible d'élaborer des volumes de flamme importants pour mieux s'adapter au volume des enceintes thermiques et, de façon plus particulière, de maîtriser la forme, la longueur et l'orientation des flammes ainsi que leur pouvoir oxydant ou réducteur et d'optimiser ainsi les rendements thermiques, et de générer des flammes différenciées orientables vers différentes zones de l'enceinte thermique et de créer des zones réductrices favorables à des réactions de combustion vive sur la charge dans l'enceinte thermique tout en conservant des propriétés de transfert thermique acceptables.

En particulier, grâce à l'adaptation indépendante des débits d'oxygène et de combustible de chacune des flammes, il est possible de générer dans l'enceinte thermique des zones de combustion différenciées, réductrices, neutres ou oxydantes, ainsi que des formes de flammes différenciées, longues ou épanouies. D'autre part, la maîtrise de la stoechiométrie, de l'impulsion et de l'orientation de chaque flamme permet d'agir sur la qualité du mélange des fluides et, pour une application donnée, de minimiser la protection de polluants tels que les oxydes d'azote. Des niveaux relativement bas d'oxydes d'azote, de l'ordre de 80 à 100 ppm, ont ainsi pu être obtenus.

La présente invention a également pour objet de proposer un brûleur pour la mise en oeuvre du procédé, de conception modulaire, de structure simple et de faibles coûts de fabrication et de montage et convenant à de nombreuses applications.

Pour ce faire, selon une caractéristique de l'invention, le brûleur, du type comprenant au moins deux injecteurs orientés dans des directions différentes et communiquant avec des conduits d'amenée de composants de mélanges oxycombustibles, est caractérisé en ce que les moyens d'amenée comprennent une conduite centrale et une conduite annulaire entourant la conduite centrale, chaque injecteur comportant une partie amont communiquant avec la conduite centrale et une chambre annulaire d'éjection communiquant avec le conduit annulaire, chaque injecteur étant dimensionné de façon à générer une flamme différenciée présentant une puissance et/ou un pouvoir oxydant/réducteur choisi.

D'autres caractéristiques et avantages de la présente invention ressortiront de la description suivante d'un mode de réalisation, donnée à titre illustratif mais nullement limitatif, faite en relation avec les dessins annexés, sur lesquels :

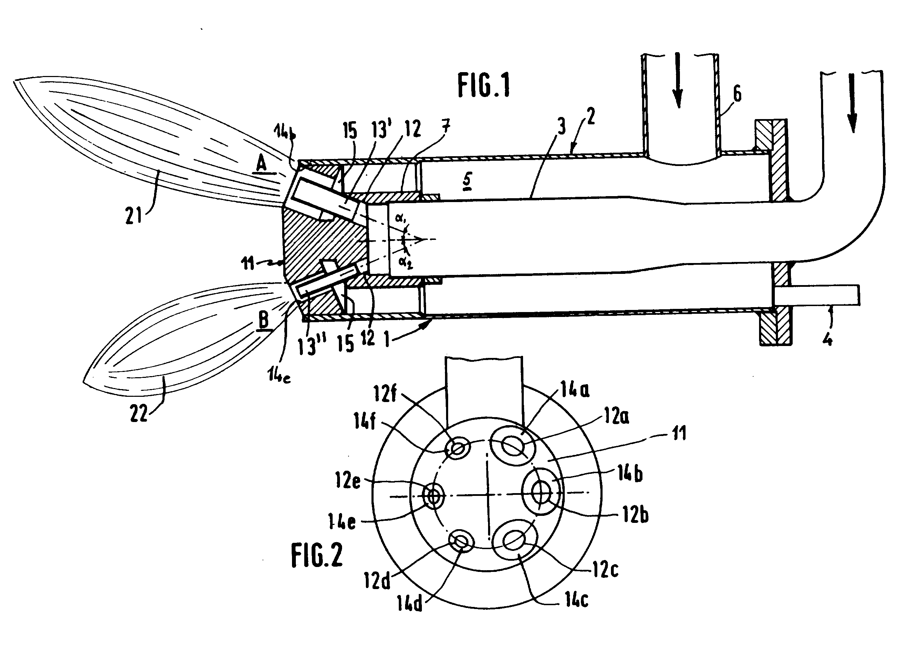

- la figure 1 est une vue schématique en coupe axiale d'un brûleur pour la mise en oeuvre du procédé selon l'invention ; et
- la figure 2 est une vue de face du brûleur de la figure 1.

Dans le mode de réalisation représenté sur les dessins, le brûleur 1 comporte une enveloppe cylindrique 2, par exemple de diamètre 160 mm, et un conduit central coaxial 3, par exemple de combustible, tel que propane ou gaz naturel, délimitant périphériquement, avec l'enveloppe 4, un conduit annulaire 5, par exemple pour de l'oxygène industriel introduit dans le conduit annulaire 5 par un embout latéral 6 traversant l'enveloppe 2. Une cellule 4 de contrôle de flamme, via l'espace annulaire 5 est prévu à l'arrière du brûleur. L'enveloppe cylindrique 2 est typiquement entourée d'un chemisage de refroidissement par de l'eau (non représenté). Dans l'extrémité avant de l'enveloppe 2 est monté un nez de brûleur interchangeable 11 comportant typiquement une partie de moyeu centrale tubulaire 7 vissée sur l'extrémité avant du conduit central 3. Le nez de brûleur 11 comporte une pluralité (six dans l'exemple représenté) d'orifices étagés angulairement répartis autour de l'axe du nez 11. Typiquement, chaque orifice étagé comprend une partie amont de diamètre réduit 12 débouchant dans la chambre intérieure de la partie de moyeu centrale 7 du nez et une partie aval 14 de plus grand diamètre. Une buse d'injection 13 est montée dans l'alésage amont 12 et s'étend dans l'alésage aval 14 jusqu'à une distance voisine de l'extrémité aval de ce dernier en formant ainsi une chambre d'éjection annulaire dans la partie aval 14. Chaque alésage aval 14 communique avec le conduit annulaire 5 par au moins un passage transversal 15 formé dans le nez 11 et débouchant radialement à l'extérieur de la partie de moyeu central 7. Chaque orifice étagé 12, 14 forme typiquement avec l'axe du nez 11 un angle divergent (αᵢ) compris entre 5 et 30°. On comprendra qu'en modifiant les sections des alésages 14 et des injecteurs 13, on peut obtenir des flammes différenciées selon les débits relatifs d'oxygène de combustible déterminés par ces sections en sus des modulations globales d'alimentation du brûleur en oxygène et en combustible, la puissance du brûleur étant modifiable par simple changement du nez 11.

Selon un aspect de l'invention, les injecteurs 13, 14 sont angulairement répartis autour de l'axe du brûleur en au moins deux groupes d'injecteurs de sections différentes. Dans l'exemple représenté, les injecteurs sont répartis en un groupe de trois injecteurs (14ₐ à 14_{c}) de section plus importante qu'un autre groupe de trois injecteurs (14_{d} à 14_{f}), produisant ainsi deux types de flammes, 21 et 22, respectivement, les angles (α₁) d'un groupe d'injecteurs étant par exemple différents des angles (α₂) de l'autre groupe d'injecteurs.

Typiquement, dans un four de fusion de métaux, notamment de fonte, les flammes puissantes (21), correspondant aux injecteurs de plus grande section, sont orientées vers la voûte du four tandis que les flammes plus courtes (22), correspondant aux injecteurs de section réduite, sont moins puissantes, moins longues et sont orientées vers la charge du four. Les flammes puissantes 21 sont avantageusement à caractère oxydant (teneur en oxygène dans le mélange oxycombustible sur-stoechiométrique) tandis qu'au moins certaines des flammes courtes 22 orientées vers la flamme, présentent avantageusement un caractère réducteur (teneur en oxygène dans le mélange oxycombustible sous-stoechiométrique). Typiquement, on associe, par paires adjacentes, une flamme sous-stoechiométrique à une flamme sur-stoechiométrique. Dans ce type d'application, les angles de divergence αᵢ des flammes sont généralement compris entre 10 et 25°, typiquement un angle de 15° pour les flammes courtes dirigées vers la charge et un angle d'environ 23° pour les flammes longues dirigées vers les parois du four. Dans de telles conditions, les flammes se développent indépendamment les unes des autres en conservant chacune son contour propre et sa divergence par rapport à l'axe du brûleur, leur longueur variant de 1 mètre à 2 mètres pour les flammes longues selon la puissance du brûleur. La puissance du brûleur est modulable entre 250 kW et 3 MW pour des débits d'oxygène entre 100 et 600 Nm³/heure et des débits de gaz naturel entre 50 et 300 m³/heure.

Le brûleur qui vient d'être décrit convient particulièrement aux procédés de chauffe dans les fours et poches de métallurgie, notamment de fusion de matériaux oxydables, et, grâce à la possibilité de réduction des émissions d'oxydes d'azote, dans les fours de verrerie, de cimenterie ou d'émaillerie.

Selon les utilisations, on pourra aisément disposer dans le conduit central 3 une canalisation de refroidissement par eau, se prolongeant éventuellement dans le centre du nez de brûleur 11. En variante, le nez de brûleur 11 peut comporter en outre un injecteur central pour la formation d'une flamme pilote au centre du brûleur.

## Revendications

1. Procédé de chauffe d'une enceinte thermique à l'aide d'au moins un brûleur générant au moins deux flammes (21,22) s'étendant dans des directions différentes à partir du brûleur, caractérisé en ce qu'on génère dans le brûleur, à partir de mélanges d'oxygène et de combustible, au moins deux flammes différenciées (21, 22) présentant des puissances et/ou pouvoirs oxydants-réducteurs différents.

2. Procédé selon la revendication 1, caractérisé en ce qu'on alimente au moins une des flammes avec des débits d'oxygène et de combustible plus élevés que les débits d'alimentation de l'autre flamme.

3. Procédé selon l'une des revendications 1 et 2, caractérisé en ce qu'au moins une des flammes est alimentée en mélange oxycombustible dont la teneur en oxygène est sous-stoechiométrique.

4. Procédé selon l'une des revendications 1 et 2, caractérisé en ce qu'au moins une des flammes est alimentée en mélange oxycombustible dont la teneur en oxygène est sur-stoechiométrique.

5. Procédé selon l'une des revendications 1 à 4, caractérisé en ce qu'on forme les flammes suffisamment écartées l'une de l'autre pour qu'elles conservent leurs contours propres.

6. Procédé selon l'une des revendications précédentes, caractérisé en ce que les flammes s'étendent dans des directions divergentes à partir d'un nez (11) du brûleur.

7. Procédé selon la revendication 3, pour le chauffage d'un four de fusion de métal oxydable, caractérisé en ce que la flamme alimentée en mélange oxycombustible sous-stoechiométrique, est orientée vers le métal à fondre.

8. Procédé selon la revendication 3 et la revendication 4, caractérisé en ce qu'on associe une flamme alimentée en mélange sous-stoechiométrique à une flamme adjacente alimentée en mélange sur-stoechiométrique.

9. Brûleur pour la mise en oeuvre du procédé selon l'une des revendications 1 à 8, comprenant au moins deux injecteurs (13, 14) orientés dans des directions différentes (α₁) et communiquant avec des moyens (2, 3) d'amenée de composants de mélanges oxycombustibles, caractérisé en ce que les moyens d'amenée comprennent une conduite centrale (3) et une conduite annulaire (5) entourant la conduite centrale, chaque injecteur comportant une partie amont (12) communiquant avec la conduite centrale (3) et une chambre annulaire d'éjection (14) communiquant avec le conduit annulaire (5), chaque injecteur étant dimensionné de façon à générer une flamme différenciée présentant une puissance et/ou un pouvoir oxydant/réducteur choisi.

10. Brûleur selon la revendication 9, caractérisé en ce que les injecteurs (13, 14) sont orientés dans des directions divergentes (αᵢ) par rapport à l'axe des conduites.

11. Brûleur selon la revendication 10, caractérisé en ce que chaque injecteur (13, 14) forme avec l'axe du brûleur un angle (αᵢ) compris entre 10 et 25°.

12. Brûleur selon l'une des revendications 9 à 11, caractérisé en ce que les injecteurs (13, 14) sont formés dans un nez de brûleur (11) monté de façon amovible à une extrémité du brûleur.

13. Brûleur selon la revendication 12, caractérisé en ce que le nez (11) comporte une partie centrale (7) montée sur la conduite centrale (3).

14. Brûleur selon l'une des revendications 9 à 13, caractérisé en ce qu'il comporte une pluralité d'injecteurs (13, 14) angulairement répartis.

## Patentansprüche

1. Verfahren zum Erwärmen einer Thermokammer mit Hilfe eines Brenners, der zumindest zwei Flammen (21, 22) erzeugt, die sich von dem Brenner ausgehend in verschiedene Richtungen ausbreiten, dadurch gekennzeichnet, daß in dem Brenner aus Gemischen von Sauerstoff und Brennstoff zumindest zwei unterschiedliche Flammen (21, 22) erzeugt werden, die unterschiedliche Leistungen und/oder ein unterschiedliches Oxydations-/Reduktionsvermögen aufweisen.

2. Verfahren nach Anspruch 1, dadurch gekennzeichnet, daß zumindest eine der Flammen mit Sauerstoff- und Brennstoffmengen gespeist wird, die größer sind als die Speisemengen der anderen Flamme.

3. Verfahren nach einem der Ansprüche 1 oder 2, dadurch gekennzeichnet, daß zumindest eine der Flammen mit einem Sauerstoff-Brennstoff-Gemisch gespeist wird, dessen Sauerstoffgehalt unterstöchiometrisch ist.

4. Verfahren nach einem der Ansprüche 1 oder 2, dadurch gekennzeichnet, daß zumindest eine der Flammen mit einem Sauerstoff-Brennstoff-Gemisch gespeist wird, dessen Sauerstoffgehalt überstöchiometrisch ist.

5. Verfahren nach einem der Ansprüche 1 bis 4, dadurch gekennzeichnet, daß die Flammen mit genügendem Abstand voneinander erzeugt werden, damit sie die ihnen eigenen Umrisse beibehalten.

6. Verfahren nach einem der vorangehenden Ansprüche, dadurch gekennzeichnet, daß sich die Flammen ausgehend von einem Kopf (11) des Brenners in divergenten Richtungen ausbreiten.

7. Verfahren nach Anspruch 3, zum Erhitzen eines Ofens zum Schmelzen oxydierbaren Metalls, dadurch gekennzeichnet, daß die mit unterstöchiometrischem Sauerstoff-Brennstoff-Gemisch gespeiste Flamme auf das zu schmelzende Metall gerichtet ist.

8. Verfahren nach Anspruch 3 oder 4, dadurch gekennzeichnet, daß eine mit unterstöchiometrischem Gemisch gespeiste Flamme einer benachbarten, mit überstöchiometrischem Gemisch gespeisten Flamme zugeordnet wird.

9. Brenner zur Anwendung des Verfahrens nach einem der Ansprüche 1 bis 8, umfassend zumindest zwei Injektoren (13, 14), die in unterschiedliche Richtungen (αᵢ) ausgerichtet und mit Mitteln (2, 3) verbunden sind, die Bestandteile von Sauerstoff-Brennstoff-Gemischen zuführen, dadurch gekennzeichnet, daß die Zufuhrmittel eine zentrale Leitung (3) und eine die zentrale Leitung umschließende, ringförmige Leitung (5) umfassen, wobei jeder Injektor einen oberen Abschnitt (12), der mit der zentralen Leitung (3) verbunden ist, und eine ringförmige Ausstoßkammer (14), die mit der ringförmigen Leitung (5) verbunden ist, aufweist, und wobei jeder Injektor so dimensioniert ist, daß er eine unterschiedliche Flamme erzeugt, die eine vorbestimmte Leistung und/oder ein vorbestimmtes Oxydations-/Reduktionsvermögen aufweist.

10. Brenner nach Anspruch 9, dadurch gekennzeichnet, daß die Injektoren (13, 14) bezüglich der Achse der Leitungen in divergente Richtungen (αᵢ) ausgerichtet sind.

11. Brenner nach Anspruch 10, dadurch gekennzeichnet, daß jeder Injektor (13, 14) einen Winkel (αᵢ) zwischen 10 und 25° mit der Achse des Brenners bildet.

12. Brenner nach einem der Ansprüche 9 bis 11, dadurch gekennzeichnet, daß die Injektoren (13, 14) in einem Brennerkopf (11) angeordnet sind, der abnehmbar an einem Ende des Brenners befestigt ist.

13. Brenner nach Anspruch 12, dadurch gekennzeichnet, daß der Kopf (11) einen zentralen Abschnitt (7) umfaßt, der an der zentralen Leitung (3) befestigt ist.

14. Brenner nach einem der Ansprüche 9 bis 13, gekennzeichnet durch eine Vielzahl von winkelmäßig versetzten Injektoren (13, 14).

## Claims

1. Process for heating a thermal chamber with the aid of at least one burner generating at least two flames (21, 22) extending in different directions from the burner,
characterized in that at least two distinct flames (21, 22), having different powers and/or oxidation-reduction abilities, are generated in the burner, from oxygen and fuel mixtures.

2. Process according to claim 1, characterized in that at least one of the flames is supplied with higher oxygen and fuel flow rates than the flow rates supplying the other flame.

3. Process according to one of claims 1 and 2, characterized in that at least one of the flames is supplied with an oxygen-fuel mixture, the oxygen content of which is lower than stoichiometric.

4. Process according to one of claims 1 and 2, characterized in that at least one of the flames is supplied with an oxygen-fuel mixture, the oxygen content of which is higher than stoichiometric.

5. Process according to one of claims 1 to 4, characterized in that the flames are formed sufficiently far apart from each other for them to preserve their own contours.

6. Process according to one of the preceding claims, characterized in that the flames extend in divergent directions from the nozzle (11) of the burner.

7. Process according to claim 3, for heating a furnace for melting an oxidizable metal, characterized in that the flame supplied with a lower than stoichiometric oxygen-fuel mixture, is directed towards the metal to be melted.

8. Process according to claim 3 and claim 4, characterized in that a flame supplied with a lower than stoichiometric mixture is associated with a flame supplied with a higher than stoichiometric mixture.

9. Burner for putting into practice the process according to one of claims 1 to 8, comprising at least two injectors (13, 14) pointing in different directions (α₁) and communicating with means (2, 3) for supplying the components of the oxygen-fuel mixtures, characterized in that the means of supply comprise a central conduit (3) and an annular conduit (5) surrounding the central conduit, each injector comprising an upstream part (12) communicating with the central conduit (3) and an annular ejection chamber (14) communicating with the annular conduit (5), the dimensions of each injector being such as to generate a distinct flame having selected power or oxidation-reduction ability.

10. Burner according to claim 9, characterized in that the injectors (13, 14) point in divergent directions (α₁) with respect to the axis of the conduits.

11. Burner according to claim 10, characterized in that each injector (13, 14) forms an angle (αᵢ) with the axis of the burner of between 10° and 25°.

12. Burner according to one of claims 9 to 11, characterized in that the injectors (13, 14) are formed in a burner nozzle (11) mounted in a removable manner at the end of the burner.

13. Burner according to claim 12 characterized in that the nozzle (11) comprises a central part (7) mounted on the central conduit (3).

14. Burner according to one of claims 9 to 13, characterized in that it comprises a plurality of angularly distributed iniectors (13,14).
